# EUROPEAN PATENT APPLICATION

(11) **EP 4 723 335 A1**
(43) Date of publication of application: **08.04.2026**
(21) Application number: 23939187.3
(22) Date of filing: 14.09.2023
(51) Int. Cl.: H01M 50/258, H01M 50/202, H01M 50/244, H01M 50/242, H01M 50/233

(54) **ENERGY STORAGE MODULE AND SEALING STRUCTURE THEREOF**

(30) Priority: 26.05.2023 CN 202321335115 U
(71) Applicant: Sungrow Power Supply Co., Ltd., Hefei, Anhui 230088 (CN)
(72) Inventor: XU, Bo, Hefei, Anhui 230088 (CN); WANG, Hao, Hefei, Anhui 230088 (CN); ZHOU, Meng, Hefei, Anhui 230088 (CN); YU, Jian, Hefei, Anhui 230088 (CN); SU, Jinguo, Hefei, Anhui 230088 (CN)
(74) Representative: Zacco Norway AS
(86) International application number: PCT/CN2023/118778
(87) International publication number: WO 2024/244212

(57) **Abstract**

An energy storage module and a sealing structure thereof The sealing structure comprises a bottom plate (1), an enclosure portion (2) and a potting adhesive (4), wherein the bottom of the enclosure portion (2) is connected to the bottom plate (1) in a sealed manner; a module unit body (3) is loaded in an enclosed space of the enclosure portion (2); and the potting adhesive (4) is potted into an opening in the top of the enclosure portion (2) and covers the top of the module unit body (3). By means of designing the sealing structure of the energy storage module in the above structural form, the potting adhesive (4) can ensure a sealing effect on the module unit body (3); in addition, when the module unit body (3) loaded in the enclosure portion (2) has a fault and generates a high-temperature and high-pressure gas, after encountering the high-temperature and high-pressure gas, the potting adhesive (4) is heated and melts into a liquid state, and the high-temperature and high-pressure gas can escape from the liquid potting adhesive (4), thereby realizing the aim of pressure relief, such that the provisions of a box cover and a pressure relief valve are omitted, thus greatly saving on the cost.

## Description

The present application claims priority to Chinese Patent Application No. 202321335115.7, titled "ENERGY STORAGE MODULE AND SEALING STRUCTURE THEREOF", filed on May 26, 2023 with the China National Intellectual Property Administration, which is incorporated herein by reference in its entirety.

### FIELD

The present application relates to the technical field of module sealing, and in particular to an energy storage module and a sealing structure thereof.

### BACKGROUND

A battery pack is one of common energy storage modules. A conventional battery pack generally adopts a box body and a box cover for sealing design. Moreover, in order to prevent explosion, an explosion relief valve is typically provided on the box cover, which leads to a high cost. Moreover, since the battery pack is protected by the box cover, it is generally impossible to directly implement cell-level fire protection and dedicated PACK-level fire protection is required, which also increases the cost. Furthermore, other energy storage modules similar to the battery pack also have similar issues as mentioned above.

In summary, how to address the issue of high cost of the sealing structure of the energy storage module has become a critical technical challenge for those skilled in the art.

### SUMMARY

In view of this, an energy storage module and a sealing structure therefor are provided according to the present application to address the issue of high cost of the sealing structure of an energy storage module.

In order to achieve the above object, the following technical solutions are provided according to the present application.

A sealing structure for an energy storage module, includes:
a bottom plate;
an enclosure, a bottom of which is hermetically connected to and arranged on the bottom plate, where a module unit body is arranged in an enclosed space defined by the enclosure; and
a potting adhesive, which is potted into an opening at a top of the enclosure and covers a top of the module unit body.

In an embodiment, the enclosure includes two insulating end plates arranged oppositely and two insulating side plates arranged oppositely, and the insulating end plates and the insulating side plates are joined together to form the enclosure.

In an embodiment, each of the insulating end plates is attached to an end of the module unit body by a sealant, and each of the insulating side plates is attached to a side of the module unit body by a sealant.

In an embodiment, the bottom plate is hermetically connected to a bottom of the module unit body by a thermal conductive adhesive.

In an embodiment, the sealing structure further includes an electronic control assembly which is arranged on an outer side of the enclosure.

In an embodiment, the electronic control assembly is mounted on the bottom plate, the electronic control assembly includes a protective cover arranged on the bottom plate and an electronic control device mounted in the protective cover, and the protective cover is connected to the bottom plate in a waterproof and sealed manner.

In an embodiment, the module unit body includes at least one battery cell working group, and a power output member and a signal output member that are electrically connected to the battery cell working group, and both the power output member and the signal output member are encapsulated in the potting adhesive.

In an embodiment, each of the battery cell working group includes multiple battery cells arranged sequentially along a length direction of the module unit body, two adjacent battery cells are electrically connected to each other through an electrode tab, the signal output member is electrically connected to each of the multiple battery cells through a signal cable, and both the signal cable and the electrode tab are encapsulated in the potting adhesive.

In an embodiment, a groove is provided at a top of an end side of the enclosure, each of the power output member and the signal output member is arranged along a wall of the groove, and the potting adhesive is potted in the groove.

In an embodiment, multiple enclosures are arranged on the bottom plate; and/or, the bottom plate is a liquid cooling plate.

Compared with the introduction of the background, the sealing structure for an energy storage module includes a bottom plate, an enclosure and a potting adhesive. A bottom of the enclosure is hermetically connected to and arranged on the bottom plate, and a module unit body is mounted in an enclosed space defined by the enclosure. The potting adhesive is potted into an opening at a top of the enclosure and covers a top of the module unit body. With the above structure of the sealing structure for an energy storage module, the potting adhesive can ensure the sealing effect of the module unit body. It should be noted that those skilled in the art can understand that the potting adhesive itself should meet the insulation and waterproof requirements, so as to ensure that the module unit body is not affected by external water vapor and avoid internal short circuit. Therefore, by potting the potting adhesive into the opening at the top of the enclosure and covering the top of the module unit body with the potting adhesive, the sealing requirements of the module unit body can be met. In addition, when the module unit body arranged in the enclosure fails and generates a high-temperature and high-pressure gas, the potting adhesive is heated by the high-temperature and high-pressure gas and melted into a liquid state, and the high-temperature and high-pressure gas can escape from the liquid potting adhesive to achieve pressure relief, such that a box cover and a pressure relief valve are omitted, thereby greatly saving the cost.

In addition, an energy storage module is provided according to the present application, including the sealing structure as described above. Since the sealing structure has the above technical effects, the energy storage module having the sealing structure should also have the corresponding technical effects, which is not repeated herein.

### BRIEF DESCRIPTION OF THE DRAWINGS

In order to more clearly illustrate the technical solutions in the embodiments of the present application or in the related art, the drawings required for describing the embodiments or the related art are briefly introduced below. Apparently, the drawings in the following description are only some of the embodiments of the present application, and other drawings may be obtained based on these drawings without any creative efforts for those skilled in the art.
FIG. 1 is a schematic axonometric view of a sealing structure for an energy storage module according to an embodiment of the present application, where a top of the sealing structure is not filled with a potting adhesive;
FIG. 2 is a schematic cross-sectional view of a sealing structure for an energy storage module according to an embodiment of the present application, where a potting adhesive is potted at the top of the sealing structure;
FIG. 3 is a partial enlarged structural schematic view of part A in FIG. 2;
FIG. 4 is a schematic front view of a sealing structure for an energy storage module according to an embodiment of the present application;
FIG. 5 is a schematic side view of a sealing structure for an energy storage module according to an embodiment of the present application;
FIG. 6 is a schematic top view of a sealing structure for an energy storage module according to an embodiment of the present application;
FIG. 7 is a schematic axonometric view of a sealing structure for an energy storage module according to an embodiment of the present application, where two enclosures are arranged on a bottom plate of the sealing structure ; and
FIG. 8 is a schematic top view of an energy storage module according to an embodiment of the present application, where two enclosures are arranged on a bottom plate of the sealing structure.

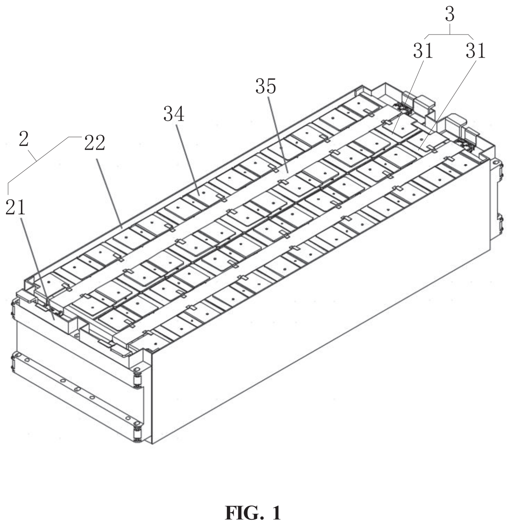

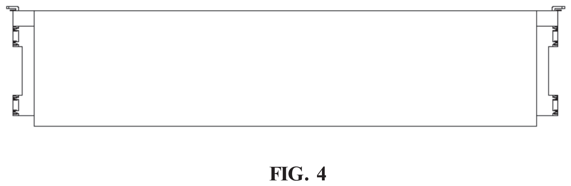

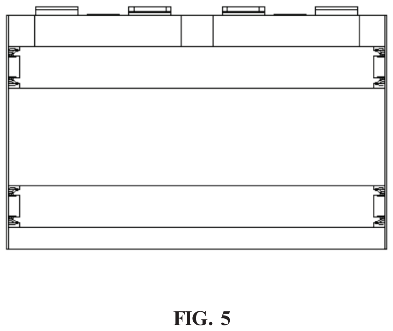

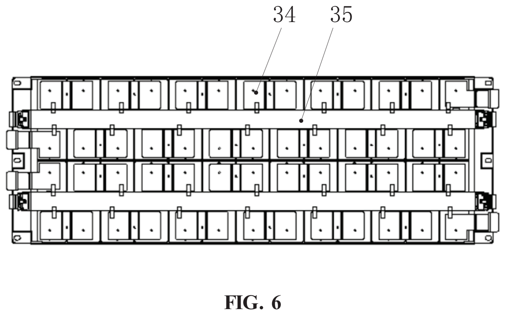

Reference numerals in FIG. 1 to FIG. 8 are listed as follows:
1. bottom plate;
2. enclosure; 21. insulating end plate; 22. insulating side plate; 23. groove;
3. module unit body; 31. battery cell working group; 310. battery cell; 32. power output member; 33. signal output member; 34. electrode tab; 35. signal cable;
4. potting adhesive;
5. electronic control assembly.

### DETAILED DESCRIPTION OF THE EMBODIMENTS

The core of the present application is to provide an energy storage module and a sealing structure therefor to address the issue of high cost of the sealing structure of an energy storage module.

Technical solutions in the embodiments of the present application are clearly and completely described hereinafter in conjunction with the drawings in the embodiments of the present application. Apparently, the embodiments described are only some rather than all of the embodiments of the present application. Based on the embodiments of the present application, all other embodiments obtained by those skilled in the art without any creative work will fall within the protection scope of the present application.

Referring to FIG. 1 to FIG. 8, a sealing structure for an energy storage module is specifically provided according to the present application. The sealing structure includes a bottom plate 1, an enclosure 2 and a potting adhesive 4. The bottom plate 1 is preferably a cooling plate, such as a liquid cooling plate. A bottom of the enclosure 2 is connected to the bottom plate 1 in a sealed manner and arranged on the bottom plate 1, and a module unit body 3 is arranged in an enclosed space defined by the enclosure 2. The module unit body 3 is typically formed by assembling multiple battery cells 310, and is mainly configured for storing electrical energy. The battery cells 310 may be connected to each other in series or in parallel, which may be determined based on actual needs during actual application. Both the enclosure 2 and the bottom plate 1 are required to be insulated from the module unit body 3 to avoid short circuit inside the module unit body 3. Each of the enclosure 2 and the bottom plate 1 may be specifically made of an insulating and waterproof material such as insulating plastic, epoxy resin or the like, or, may be made of a non-insulating material with an insulating sealing material added between the enclosure 2 and the module unit body 3 and between the bottom plate 1 and the module unit body 3. The potting adhesive 4 is potted into an opening at a top of the enclosure 2 and covers a top of the module unit body 3. Specifically, the potting adhesive 4 may be potted after the module unit body 3 is mounted in an inner cavity of the enclosure 3, thereby forming an insulating and sealing adhesive layer on the top of the module unit body 3. It should be understood by those skilled in the art that the potting adhesive 4 itself is insulated and waterproof, so as to ensure that the module unit body 3 is not affected by external water vapor and avoid short circuits among internal circuits.

With the above structure of the sealing structure for an energy storage module, the potting adhesive 4 can ensure the sealing performance of the module unit body 3, which can not only ensure that the module unit body is not affected by external water vapor, but also avoid internal short circuits. Therefore, the potting adhesive 4 is potted into the opening at the top of the enclosure 2 and covers the top of the module unit body 3, which can meet the sealing requirements of the module unit body 3. Moreover, when the module unit body 3 arranged in the enclosure 2 has a fault and generates a high-temperature and high-pressure gas, the potting adhesive 4 melts into a liquid state after being heated by the high-temperature and high-pressure gas, and the high-temperature and high-pressure gas may escape from the liquid potting adhesive 4 to achieve pressure relief, without arranging a box cover and a pressure relief valve, thereby greatly saving the cost.

In some specific embodiments, as shown in FIG. 1, the enclosure 2 may specifically include two insulating end plates 21 arranged oppositely and two insulating side plates 22 arranged oppositely. The insulating end plates 21 and the insulating side plates 22 are joined together to form the enclosure 2. The enclosure 2 is formed by the insulating end plates 21 and the insulating side plates 22, so that the space enclosed by the enclosure 2 can better match the circumferential dimensions of the module unit body 3. Compared to an integral enclosure, the enclosure 2 is more convenient to install. This is because when a module unit body 3 with a size similar to the inner cavity of the integrated enclosure is mounted into the integrated enclosure, it may be difficult to assemble them.

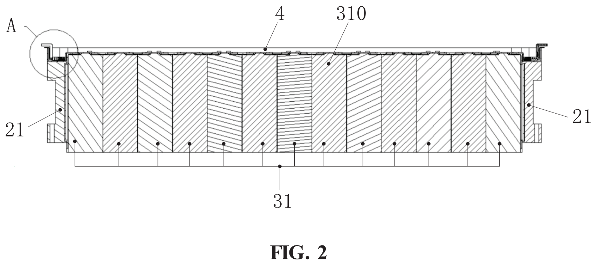

In a further embodiment, referring to FIG. 1 and FIG. 2, each of the insulating end plates 21 is attached to an end of the module unit body 3 by a sealant, and each of the insulating side plates 22 is attached to a side of the module unit body 3 by a sealant, so that the installation of the enclosure 2 is efficient and convenient, and a splicing seam of adjacent edges of any two can be filled with the sealant, ensuring reliable sealing performance. It can be understood that the above manner of attaching the insulating side plate and the insulating end plate onto the module unit body 3 by the sealant is merely an example of the embodiments of the present application. In actual application, each of the insulating side plate and the insulating end plate may be connected to the module unit body by a fastener or a connector, and then a splicing seam between them may be filled with the sealant, or, an assembly gap between them may be sealed by a sealing strip, which may be determined based on actual needs in actual application and is not specifically limited herein.

In some specific embodiments, the bottom plate 1 may be hermetically connected to a bottom of the module unit body 3 by a thermal conductive adhesive. With the sealing connection by the thermal conductive adhesive, the sealing requirement for the bottom of the module unit body 3 can be met, and the heat from the module unit body 3 can be transferred to the bottom plate 1 by the thermal conductive adhesive. Thus, the heat can be quickly dissipated through the bottom plate 1. The bottom plate 1 is preferably a liquid cooling plate to improve the heat dissipation effect.

In addition, before and after maintenance of the energy storage module, the energy storage module generally requires stable airtightness of a battery cell assembly in the energy storage module. However, the airtightness stability of a conventional energy storage module is generally destroyed after maintenance. Taking a conventional battery pack as an example, it is necessary to remove a box cover or open a maintenance window of the conventional battery pack during maintenance, which may destroy the airtightness of the entire battery pack and pose a risk of breaking the internal airtightness stability. To address this issue, the sealing structure for an energy storage module according to the present application may further include an electronic control assembly 5 which is preferably arranged on an outer side of the enclosure 2. By arranging the electronic control assembly 5 on the outer side of the enclosure 2, the airtightness of the module unit body 3 arranged inside the enclosure 2 is not affected when the electronic control module 5 is disassembled for maintenance, so that the operation of the energy storage module is safe and stable.

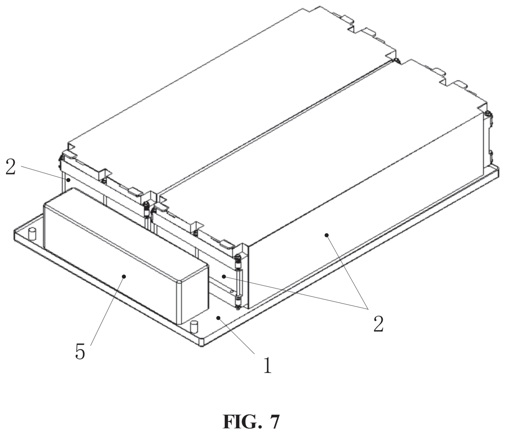

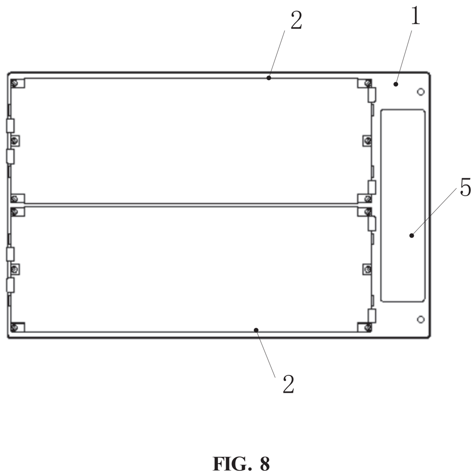

In a further embodiment, referring to FIG. 1 in conjunction with FIG. 7 and FIG. 8, the electronic control assembly 5 may be specifically mounted on the bottom plate 1. The electronic control assembly 5 may specifically include a protective cover covered on the bottom plate 1 and an electronic control device mounted in the protective cover. The electronic control device may specifically include a fuse, a battery management unit (BMU) and other devices, which is not specifically limited herein. In addition, the protective cover may be specifically connected to the bottom plate 1 in a waterproof and sealed manner. For instance, a sealing strip is provided in a matching gap between the protective cover and the bottom plate 1. The protective cover may be detachably connected to the bottom plate 1, for example, they are detachably connected by a fastener. The protective cover may be disassembled, assembled and maintained separately. It should be noted that, in addition to being mounted on the bottom plate 1, the electronic control assembly 5 may be mounted at other locations, as long as it is ensured that the electronic control assembly 5 is arranged outside the enclosure 2. For example, the electronic control assembly 5 is mounted on an outer wall surface of the enclosure 2, which is not specifically limited herein.

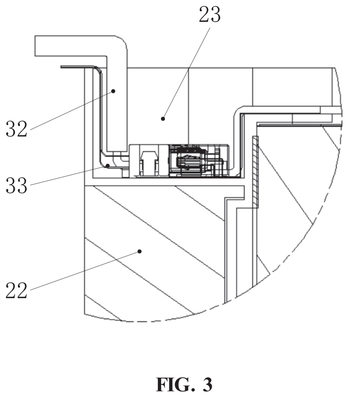

In some specific embodiments, referring to FIGS. 1-2 in conjunction with FIG. 3, the module unit body 3 may include at least one battery cell working group 31, and a power output member 32 and a signal output member 33 that are electrically connected to the battery cell working group 31. Both the power output member 32 and the signal output member 33 are encapsulated in the potting adhesive 4. Each battery cell working group 31 may specifically include multiple battery cells 310 arranged sequentially along a length direction of the module unit body 3, and two adjacent battery cells 310 are electrically connected to each other by an electrode tab 34. The two adjacent battery cells 310 may be electrically connected to each other in parallel or in series, which may be determined based on specific requirements in actual application. The signal output member 33 is electrically connected to each of the multiple battery cells 310 by a signal cable 35, and both the signal cable 35 and the electrode tab 34 are potted in the potting adhesive 4. By designing the module unit body 3 into the structure with the battery cell working group 31, the configuration of the module unit body 3 is flexible and diversified, and various energy storage power modes can be configured based on requirements. By encapsulating the power output member 32 and the signal output member 33 in the potting adhesive 4, as well as encapsulating the signal cable 35 and the electrode tab 34 in the potting adhesive 4, electrical connectors can be well protected.

In some other specific embodiments, a groove 23 may be further provided at the top of an end side of the enclosure 2, and each of the power output member 32 and the signal output member 33 may be arranged along a wall of the groove 23, and the potting adhesive 4 is potted in the groove 23. By arranging the structure of the groove, the potting effect of the power output member 32 and the signal output member 33 is improved, and the failure of electrical connection caused by the loosening of the power output member 32 and the signal output member 33 is effectively avoided.

In some more specific embodiments, referring to FIG. 7 and FIG. 8, multiple enclosures 2 may be provided on the bottom plate 1. By arranging the multiple enclosures 2, multiple module unit bodies 3 can be mounted on a single bottom plate 1, which facilitates configuration selection based on actual power requirements.

In addition, an energy storage module is further provided according to the present application, including the sealing structure described above. Since the sealing structure has the above technical effects, the energy storage module having the sealing structure should also have the corresponding technical effects, which is not described in detail herein.

It should be noted that all the embodiments in the specification are described in a progressive manner, and each embodiment focuses on the differences from other embodiments. The same and similar parts among the embodiments can be referred to each other.

It should be understood that if terms such as "system", "device", "unit" and/or "module" are used herein, it is merely an approach for distinguishing different components, elements, parts, portions or assembly at different levels. However, if other expressions can realize the same purpose, they may be replaced by other expressions.

As shown in the present application and the claims, the words such as "a", "one", "one type" and/or "the" do not specifically refer to the singular, but may also include the plural, unless the context clearly indicates exceptions. Generally speaking, the terms "include" and "comprise" only indicate that the inclusion of the steps and elements that have been clearly identified, and these steps and elements do not constitute an exclusive list. A method or an apparatus may also include other steps or elements. An element defined by the statement "comprising (including) a..." do not exclude the existence of other identical elements in a process, method, product or apparatus including the element.

In the description of the embodiments of the present application, unless otherwise specified, "/" means or, for example, A/B can mean A or B. "And/or" herein is only an association relationship that describes the associated objects, which means that there may be three kinds of relationships. For example, A and/or B may mean that: A exists alone, A and B exist simultaneously, and B exists alone. In addition, in the description of the embodiments of the present application, "multiple" refers to two or more.

The terms "first" and "second" are merely for purpose of description, and should not be interpreted as indicating or implying relative importance or implying the number of the indicated technical features. Therefore, a feature defined by "first" or "second" may explicitly or implicitly includes one or more such features.

The flowchart, if used in the present application, is for illustrating operations performed by a system according to the embodiments of the present application. It should be understood that the operations are not necessarily performed in the listed order. Instead, the steps may be performed in a reverse order or simultaneously. In addition, other operations may be added to these procedures, or one or more operations may be removed from these procedures.

The principle and implementations of the present application are described herein by using specific embodiments, and the description of the above embodiments is only used to help understand the core idea of the present application. It should be noted that, several improvements and modifications may be made to the present application by those skilled in the art, without departing from the principles of the present application, and these improvements and modifications also fall within the protection scope of the claims of the present application.

## Claims

1. A sealing structure for an energy storage module, **characterized by** comprising:
a bottom plate (1);
an enclosure (2), a bottom of which is hermetically connected to and arranged on the bottom plate (1), wherein a module unit body (3) is arranged in an enclosed space defined by the enclosure (2); and
a potting adhesive (4), which is potted into an opening at a top of the enclosure (2) and covers a top of the module unit body (3).

2. The sealing structure for an energy storage module according to claim 1, wherein the enclosure (2) comprises two insulating end plates (21) arranged oppositely and two insulating side plates (22) arranged oppositely, and the insulating end plates (21) and the insulating side plates (22) are joined together to form the enclosure (2).

3. The sealing structure for an energy storage module according to claim 2, wherein each of the insulating end plates (21) is attached to an end of the module unit body (3) by a sealant, and each of the insulating side plates (22) is attached to a side of the module unit body (3) by a sealant.

4. The sealing structure for an energy storage module according to claim 2, wherein the bottom plate (1) is hermetically connected to a bottom of the module unit body (3) by a thermal conductive adhesive.

5. The sealing structure for an energy storage module according to claim 1, further comprising an electronic control assembly (5) which is arranged on an outer side of the enclosure (2).
In addition, it is necessary to remove a box cover or open a maintenance window during the maintenance process of a battery pack, which may disrupt the airtightness of the entire battery pack and pose a risk of damaging the internal airtightness stability.

6. The sealing structure for an energy storage module according to claim 5, wherein the electronic control assembly (5) is mounted on the bottom plate (1), the electronic control assembly (5) comprises a protective cover arranged on the bottom plate (1) and an electronic control device mounted in the protective cover, and the protective cover is connected to the bottom plate (1) in a waterproof and sealed manner.

7. The sealing structure for an energy storage module according to claim 1, wherein the module unit body (3) comprises at least one battery cell working group (31), and a power output member (32) and a signal output member (33) that are electrically connected to the at least one battery cell working group (31), and both the power output member (32) and the signal output member (33) are encapsulated in the potting adhesive (4).

8. The sealing structure for an energy storage module according to claim 7, wherein
each of the at least one battery cell working group (31) comprises a plurality of battery cells (310) arranged sequentially along a length direction of the module unit body (3), and two adjacent battery cells (310) are electrically connected to each other through an electrode tab (34); and
the signal output member (33) is electrically connected to each of the plurality of battery cells (310) through a signal cable (35), and both the signal cable (35) and the electrode tab (34) are encapsulated in the potting adhesive (4).

9. The sealing structure for an energy storage module according to claim 7, wherein a groove (23) is provided at a top of an end side of the enclosure (2), each of the power output member (32) and the signal output member (33) is arranged along a wall of the groove (23), and the potting adhesive (4) is potted in the groove (23).

10. The sealing structure for an energy storage module according to any one of claims 1 to 9, wherein
a plurality of enclosures (2) are arranged on the bottom plate (1); and/or
the bottom plate (1) is a liquid cooling plate.

11. An energy storage module, comprising the sealing structure for an energy storage module according to any one of claims 1 to 10.
